# EUROPEAN PATENT SPECIFICATION

(11) **EP 2 404 790 B1**
(45) Date of publication and mention of the grant of the patent: **11.09.2013**
(21) Application number: 11173072.7
(22) Date of filing: 07.07.2011
(51) Int. Cl.: B60R 25/00

(54) **Wheel clamp and methods of use**
Radkralle und Anwendungsverfahren.
Sabot de Denver et méthode d'usage.

(30) Priority: 08.07.2010 GB 201011516
(43) Date of publication of application: 11.01.2012
(73) Proprietor: Maypole Limited, Woodgate Business Park Birmingham B32 3DE (GB)
(72) Inventor: Sworder, Malcolm Alan, Swindon, SN 25 2HW (GB); Jones, Christopher, Swindon, SN2 2NY (GB)
(74) Representative: Gee, Steven William

(56) References cited:
- WO-A1-2006/003357
- AT-B- 327 702
- GB-A- 2 276 133
- GB-A- 2 277 724
- GB-A- 2 465 209

## Description

### FIELD OF THE INVENTION

This invention relates to a wheel clamp and to methods of use of the wheel clamp.

### BACKGROUND TO THE INVENTION

In order to reduce the likelihood that a vehicle can be unlawfully removed, it is known to fit a wheel clamp to a road wheel of the vehicle. Wheel clamps fall into two broad classes. The first class comprises wheel clamps having (typically) three arms which can lie against three separate parts of the road wheel. At least one of the arms extends beyond the periphery of the tyre of the road wheel whereby the road wheel cannot rotate without the arm(s) fouling the ground and/or a part of the vehicle. The fitted wheel clamp therefore prevents or obstructs the normal rotation of the road wheel.

In the unlocked condition of the wheel clamp the arms can be moved relative to one another whereby they can be manipulated to pass around the road wheel. In the locked condition the arms are secured and locked in their relative positions. A wheel clamp falling into this general class is described in our granted European patent 1 340 658.

The second class of wheel clamp comprises those wheel clamps which typically have a single clamping element adapted to embrace a part of the road wheel, or a locking bar adapted to fit through a part of the road wheel. Examples utilising a locking bar adapted to fit through a part of the road wheel are suited to alloy wheels for example which have relatively large spaces between the spokes through which the locking bar can be passed. The clamping element or locking bar is connected to an arm which is designed to project beyond the periphery of the wheel, so that the wheel cannot be rotated without the arm fouling the ground and/or a part of the vehicle. The wheel clamp typically also has a cover plate which is designed to be larger than the spacing between the spokes of the road wheel, whereby to prevent the clamping element or locking bar being removed from between the spokes. The cover is also designed to obscure at least one of the wheel nuts, so that the road wheel cannot be removed and the wheel clamp thereby circumvented.

Wheel clamps such as those described are often used to protect caravans when in long-term storage, and to protect cars upon dealer forecourts, for example.

Such a wheel clamp is described in GB 2 465 209 according to the preamble of claim 1.

The present invention provides a wheel clamp falling into the second class described above, and has a particularly simple method of fitment.

### SUMMARY OF THE INVENTION

According to the invention there is provided a wheel clamp having a locking bar, an arm and a cover plate, the locking bar being securely connected to the arm, the locking bar and locking sleeve having cooperating first screw threads, the locking sleeve carrying a locking screw which can rotate relative to the locking sleeve and can be secured to the locking bar by way of cooperating second screw threads, the pitch of the first screw threads being greater than the pitch of the second screw threads.

Preferably, the locking bar has the first screw thread formed on its outer surface, and has a recess which is tapped with the second screw thread.

Desirably, the locking sleeve has a flange adjacent one of its ends. Preferably the first screw thread and the second screw thread are formed at the end of the locking sleeve opposed to the flange.

Preferably, the locking sleeve is substantially circular in cross-section. Desirably, the dimension of the flange is greater than the dimension of the cover plate opening whereby the flange can retain the cover upon the locking sleeve. Preferably also the cover plate has a substantially circular opening formed therethrough, whereby the cover plate is rotatable relative to the locking sleeve.

In preferred embodiments of the wheel clamp the locking bar is adapted to be passed through a road wheel, between adjacent spokes of the road wheel, and the cover plate can be secured directly to the locking bar by the locking sleeve.

To fit the preferred wheel clamp the arm and locking bar are placed adjacent to a road wheel and the locking bar is passed through the road wheel, preferably between adjacent spokes of the road wheel. The cover plate is fitted to the locking sleeve and the locking sleeve is screwed onto the locking bar by way of the cooperating first screw threads. When the locking sleeve has been tightened sufficiently so that the cover plate is held against the road wheel, the locking screw is inserted into the locking sleeve and screwed into the locking bar. When the locking screw has been tightened the locking means is fitted to obscure the head of the locking screw and prevent unauthorised removal of the locking screw.

In a vehicle having four or more road wheels, the locking bar will typically be passed from the distal side (back) of a chosen road wheel to the proximal side (front) of the chosen road wheel, so that the locking sleeve, locking screw and locking means are fitted from the exposed front of the road wheel and the cover obscures one or more of the wheel nuts by which the road wheel is secured to the vehicle.

In alternative embodiments the wheel clamp utilises a clamping element which can embrace a part of the road wheel. The clamping element does not pass through the road wheel but has parts which underlie the rim of the road wheel in use. A locking bolt, locking sleeve, locking screw and locking means as described above can be used to secure the parts of the clamping element in position upon the road wheel.

If an unauthorised attempt to remove the wheel clamp is made, i.e. without first removing the locking means, it is necessary to remove the locking sleeve, and the only way the locking sleeve can be removed is by rotating it relative to the locking bar so as to separate the cooperating first screw threads. Rotation of the locking sleeve will, however, be prevented by the locking screw. Even if the locking screw rotates with the locking sleeve, the smaller pitch upon the second screw threads by which the locking screw is secured to the locking sleeve will limit the number of rotations of the locking sleeve which can be made.

### BRIEF DESCRIPTION OF THE PREFERRED EMBODIMENTS

The invention will now be described in more detail, by way of example, with reference to the accompanying drawing, in which:

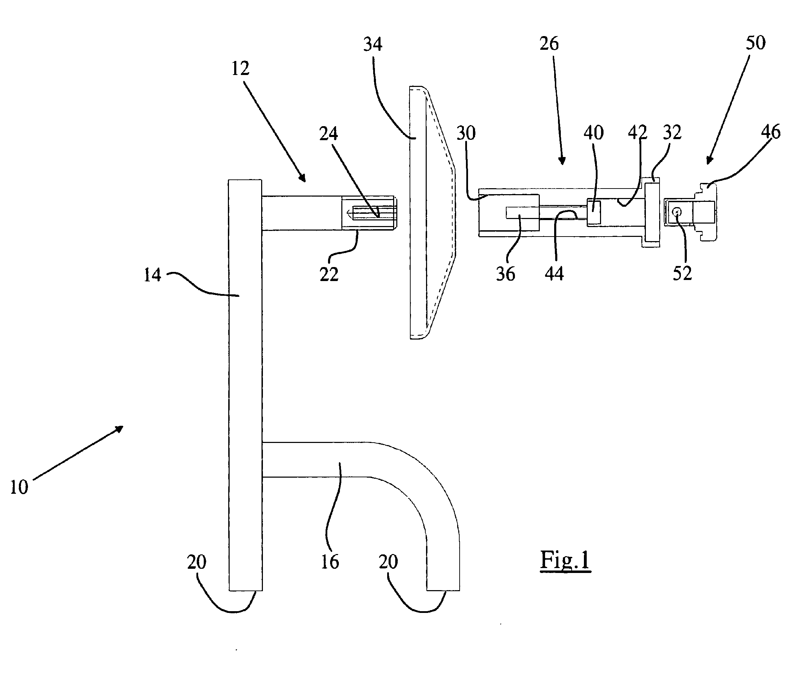

- Fig.1: is an exploded view of the components of the wheel clamp according to the present invention.

### DETAILED DESCRIPTION

The wheel clamp 10 comprises a locking bar 12 and an arm 14. In this embodiment the locking bar 12 is permanently secured to the arm 14, but in other (less desirable) embodiments the locking bar can simply be carried by the arm, perhaps being fitted through an opening in the arm, it being necessary that the locking bar 12 is secured against rotation relative to the arm 14.

In this embodiment the arm 14 carries an extension 16, part of which is designed to lie against the ground-engaging surface of a road wheel (not shown). In use, a part of the road wheel lies between the extension 16 and the locking bar 12.

The arm 14 and the extension 16 have respective end parts 20, both of which lie outside the circumference of the road wheel, and therefore engage the ground and/or part of the vehicle if the road wheel is rotated.

The outside surface of the end of the locking bar 12 is threaded with a first screw thread 22. The end of the locking bar 12 is recessed and tapped with a second screw thread 24.

A locking member or sleeve 26 has a first recess 30 which has a corresponding first screw thread. The cooperating first screw threads serve to locate the locking sleeve 26 upon the locking bar 12.

The locking sleeve 26 is substantially circular in cross-section, and has a flange 32 at its end opposed to the recess 30. A cover plate 34 has an opening (not shown) which is sized to fit over the locking sleeve 26, so that when fitted the cover can rotate relative to the locking sleeve 26 (and vice versa). Relative rotation of the cover plate 34 is desirable so as to reduce the likelihood of unauthorised force being imparted to the locking bar 12. The flange 32 is larger than the opening in the cover plate 34, however, so that the flange 32 serves to retain the cover plate 34 upon the locking sleeve 26.

The locking sleeve 26 accommodates a locking element or screw 36. The locking sleeve 26 has a second recess 42 which accommodates the head 40 of the locking screw 36. The first recess 30 and the second recess 42 are formed in opposed ends of the locking sleeve 26, and are connected by a central passage 44 which accommodates the shaft of the locking screw 36. The locking screw 36 projects into the recess 30 as shown, and is rotatable within the locking sleeve 26.

The open end of the second recess 42 is enlarged in order to accommodate the head 46 of a locking means 50. The locking means 50 is of conventional design, including a lock body within which the correct key can be rotated to drive one or more lock members 52 outwardly into an undercut annular groove (not shown) within the recess 42. Accordingly, when fitted and locked, the lock member(s) 52 project into the annular groove of the recess 42 and retain the locking means 50 within the recess. The locking means 50 can rotate substantially freely within the recess 42, and the head 46 of the locking means 50 is substantially flush with the end of the enlarged portion of the recess 42. It is therefore difficult to place any significant force upon the locking means 50 which might act to remove or disable the locking means.

When the wheel clamp 10 is to be fitted to a road wheel (not shown), the arm 14 and locking bar 12 are manipulated relative to the road wheel so that the locking bar 12 passes through a chosen part of the road wheel (for example between the spokes of an alloy road wheel). The cover plate 34 is then placed over the locking sleeve 26 and the locking sleeve 26 is screwed onto the locking bar 12 by way of the cooperating first threads.

Ideally the locking sleeve 26 is screwed onto the locking bar 12 until the cover plate 34 engages the road wheel, and the threaded portion 22 of the locking bar 12 can be sufficiently long to ensure that the cover plate 34 can engage the road wheel for a variety of road wheels having a width within a chosen range. Alternatively, if the length of the threaded portion 22 is not sufficient to permit the cover plate 34 to engage the road wheel, the locking sleeve 26 is tightened until the end of the locking bar 12 engages the bottom of the recess 30. It is preferred, however, that the locking sleeve 26 can be tightened sufficiently so that the cover plate 34 engages the road wheel since that will reduce the freedom of movement available to a person intent on unauthorised removal of the wheel clamp 10, and will in particular reduce the likelihood that such a person can access the wheel nut(s) or wheel bolt(s) which lie underneath the cover plate and which secure the road wheel to the vehicle (not shown).

When the locking sleeve 26 has been tightened sufficiently, the locking screw 36 is passed through the central passage 44 and screwed into the recess 24 in the locking bar 12, preferably until the head 40 of the locking screw 36 engages the bottom of the second recess 42 and is tightened thereagainst. The head 40 of the locking screw is ideally fitted with a recess (not shown) to accommodate an Allen key or the like. The locking means 50 is then fitted into the recess 42 to obscure the head 40 of the locking screw 36.

It will be understood that unauthorised attempts to remove the wheel clamp 10 require the separation of the locking sleeve 26 from the locking bar 12. That requires the locking sleeve 26 to be rotated relative to the locking bar 12 in order to separate the first screw threads of the recess 30 from the first screw thread 22 of the locking bar 12, and that rotation is resisted by the locking screw 36. Even if the locking screw 36 rotates with the locking sleeve 26, the second screw threads of the locking screw 36 and recess 24 have a smaller pitch that the first screw threads 22 of the locking bar 12 and the recess 30, and whilst some relative rotation of the locking sleeve 26 may be possible it will typically be far less than one rotation and far less than is required to remove the locking sleeve 26 from the locking bar 12.

In order to permit more rapid fitment and more rapid authorised removal of the wheel clamp 10, the pitch of the first screw thread can be relative large. In one practical embodiment the locking bar 12 has a diameter of 30mm and the first screw thread 22 has a pitch of 10mm (the thread has five start positions separated around the locking bar so that the distance between each of the separate threads along the locking bar 12 is 2mm. Such a large pitch is ideal, and it is preferred in all embodiments that the pitch of the first screw thread 22 be several millimetres. In practice therefore, only a relatively few rotations of the locking sleeve 26 can be required in order to fit the locking sleeve 26 to the locking bar 12.

The pitch of the second screw thread can also be relatively large, but ideally significantly less than the pitch of the first screw thread. In the practical embodiment the pitch of the second screw thread 24 is 1.75mm, so that the respective screw threads lock up when the locking sleeve 26 has undergone only a very small angular movement, even if the locking screw 36 is initially relatively loose (i.e. the head 40 of the locking screw 36 does not initially engage the bottom of the second recess 42). Ideally the difference in the respective pitches is at least 2 mm, and ideally at least 5 mm, so that the respective screw threads will typically lock up when the locking sleeve 26 has undergone less than one complete rotation.

It will be appreciated that in a vehicle having four or more road wheels, only one side of the road wheel (the proximal side) is easily accessible. The relatively small size of the arm 14 and locking bar 12 allow relatively easy fitment, however, i.e. notwithstanding that the arm 14, extension 16 and locking bar 12 must be sufficiently robust to withstand attempts to forcibly remove or cut the wheel clamp 10, it is relatively easy to manipulate the arm 14 around the rear (distal) side of the road wheel and pass the locking bar 12 through the road wheel, without damaging the road wheel. A removable protective cap (suitably of plastic) can be provided for the user to fit over the threads 22 whilst the locking bar 12 and arm 14 are being fitted to or removed from the road wheel. The cap will reduce the likelihood of the threads 22 and/or the road wheel becoming damaged during the fitting or removal procedure.

In the first embodiment described above the locking bar passes through the road wheel, and is therefore suited to road wheels having relatively large spaces between adjacent spokes, and to road wheels in which the brakes do not substantially fill the inside of the road wheel. In an alternative embodiment the locking bar does not pass through the road wheel but instead lies outside the perimeter of the road wheel. This embodiment utilises a second arm which is pivoted or articulated to the first arm, the first and second arms being adapted to embrace a chosen part of the road wheel and to engage opposed sides of the road wheel in use. The first and second arms have respective parts which lie outside the perimeter of the road wheel, and which are secured together by way of a locking bolt similar to the locking bolt 12, and a locking sleeve similar to the locking sleeve 26. In such embodiments a cover plate which is designed to cover one or more of the wheel nuts is typically fixed to the second arm, and the flange on the locking sleeve is adapted to engage the second arm. It is thereby arranged that as the locking sleeve is screwed onto the locking bar the first and second arms are urged together, ideally into engagement with the respective sides of the road wheel. A locking screw similar to the locking screw 36, and a locking means similar to the locking means 50, are used to lock the first and second arms of the wheel clamp in position upon the road wheel.

## Claims

1. A wheel clamp (10) having a locking bar (12), an arm (14) and a cover plate (34), the locking bar (12) being fixed against substantial rotation relative to the arm (14), a locking member (26) adapted for connection to the locking bar (12) by way of cooperating first screw threads (22), the locking member (26) carrying a locking element (36) which can rotate relative to the locking member (26) **characterised by** the locking element (36) being adapted for connection to the locking bar (12) by way of cooperating second screw threads (24), the pitch of the first screw threads (22) being greater than the pitch of the second screw threads (24).

2. A wheel clamp (10) according to claim 1 in which the first screw thread of the locking member (26) is formed inside a recess (30) adapted to fit over a part of the locking bar (12).

3. A wheel clamp (10) according to claim 2 in which the locking member (26) has a flange (32) adjacent one of its ends.

4. A wheel clamp (10) according to claim 3 in which the flange (32) is located at the end of the locking member (26) opposed to the recess (30).

5. A wheel clamp (10) according to any one of claims 1-4 in which the locking element (36) is a bolt or screw.

6. A wheel clamp (10) according to any one of claims 1-5 in which the locking member (26) has a passage (44) for receiving the locking element (36).

7. A wheel clamp (10) according to claim 6 in which the passage (44) is substantially centrally-located within locking member (26).

8. A wheel clamp (10) according to any one of claims 1-7 in which the locking member (26) can accommodate a locking means (50).

9. A wheel clamp (10) according to any one of claims 1-10 in which the locking member is of substantially circular cross-section.

10. A wheel clamp (10) according to claim 3 or claim 4 in which the crosssectional dimension of the flange is greater than the dimension of an opening in the cover plate (34) through which the remainder of the locking member (26) can pass.

11. A wheel clamp (10) according to claim 10 in which the opening in the cover plate (34) is substantially circular.

12. A wheel clamp according to any one of claims 1-9 in which the arm is a first arm, the wheel clamp having a second arm which is movably connected to the first arm, the first and second arms in use engaging respective sides of a road wheel.

13. A wheel clamp according to claim 12 in which the cover plate is carried by the second arm.

14. A method of clamping a road wheel with a wheel clamp according to claims 1- 11 of the present invention, including the following steps:
passing the locking bar (12) through a chosen part of the road wheel;
fitting the cover plate (34) to the locking member (26);
connecting the locking member (26) to the locking bar (12) by way of the cooperating first screw threads (22);
inserting the locking element (36) through the locking member (26) and
connecting the locking element to the locking bar (12) by way of the cooperating second screw threads (24);
fitting the locking means (50) to the locking member (26) whereby to obscure the head (40) of the locking element (36).

15. A method of clamping a road wheel with a wheel clamp according to claim 12 or claim 13 of the present invention, including the following steps:
placing the first arm, the locking bar and the second arm adjacent to the road wheel;
connecting the locking member to the locking bar by way of the cooperating first screw threads, and thereby moving the first arm and the second arm into engagement with respective sides of the road wheel;
inserting the locking element through the locking member and connecting the locking element to the locking bar by way of the cooperating second screw threads;
fitting a locking means to the locking member whereby to obscure the head of the locking element.

## Patentansprüche

1. Radkralle (10) mit einem Verriegelungsstab (12), einem Arm (14) und einer Abdeckscheibe (34), wobei der Verriegelungsstab (12) fixiert ist, um einer wesentlichen Drehung bezogen auf den Arm (14) entgegenzuwirken, einem Verriegelungsbauteil (26), das für die Verbindung mit dem Verriegelungsstab (12) mittels erster zusammenwirkender Schraubgewinde (22) ausgelegt ist, wobei das Verriegelungsbauteil (26) ein Verriegelungselement (36) trägt, das relativ zu dem Verriegelungsbauteil (26) drehbar ist, **dadurch gekennzeichnet, dass** das Verriegelungselement (36) für die Verbindung mit dem Verriegelungsstab (12) mittels zweiter zusammenwirkender Schraubgewinde (24) ausgelegt ist, wobei die Neigung der ersten zusammenwirkenden Schraubgewinde (22) größer ist als die Neigung der zweiten zusammenwirkenden Schraubgewinde (24).

2. Radkralle (10) nach Anspruch 1, bei der das erste Schraubgewinde des Verriegelungsbauteils (26) in einer Aussparung (30) ausgebildet ist, die über einen Teil des Verriegelungsstabs (12) passt.

3. Radkralle (10) nach Anspruch 2, bei der das Verriegelungsbauteil (26) an einem seiner Enden einen Flansch (32) aufweist.

4. Radkralle (10) nach Anspruch 3, bei der der Flansch (32) am Ende des Verriegelungsbauteils (26) der Aussparung (30) gegenüberliegt.

5. Radkralle (10) nach einem der Ansprüche 1-4, bei der das Verriegelungselement (36) ein Bolzen oder eine Schraube ist.

6. Radkralle (10) nach einem der Ansprüche 1-5, bei der das Verriegelungsbauteil (26) einen Kanal (44) aufweist, der das Verriegelungselement (36) aufnimmt.

7. Radkralle (10) nach Anspruch 6, bei der der Kanal (44) im Wesentlichen mittig in dem Verriegelungsbauteil (26) angeordnet ist.

8. Radkralle (10) nach einem der Ansprüche 1-7, bei der das Verriegelungsbauteil (26) ein Verriegelungsmittel (50) aufnehmen kann.

9. Radkralle (10) nach einem der Ansprüche 1-10, bei der das Verriegelungsbauteil (26) einen im Wesentlichen kreisförmigen Querschnitt aufweist.

10. Radkralle (10) nach Anspruch 3 oder 4, bei der der Querschnitt des Flanschs (32) größer ist als der Querschnitt einer Öffnung in der Abdeckscheibe (34), durch die der übrige Teil des Verriegelungsbauteils (26) geschoben werden kann.

11. Radkralle (10) nach Anspruch 10, bei der die Öffnung in der Abdeckscheibe (34) im Wesentlichen kreisförmig ist.

12. Radkralle (10) nach einem der Ansprüche 1-9, bei der der Arm ein erster Arm ist, wobei die Radkralle einen zweiten Arm besitzt, der beweglich mit dem ersten Arm verbunden ist, wobei der erste und der zweite Arm im Gebrauch in jeweilige Seiten eines Rades eines Straßenfahrzeugs eingreifen.

13. Radkralle (10) nach Anspruch 12, bei der die Abdeckscheibe (34) von dem zweiten Arm gehalten wird.

14. Verfahren zum Anbringen einer Radkralle (10) an einem Rad eines Straßenfahrzeugs nach den Ansprüchen 1-11 der vorliegenden Erfindung, das folgende Schritte umfasst:
Durchstecken des Verriegelungsstabs (12) durch einen ausgewählten Teil des Rades eines Straßenfahrzeugs;
Anbringen der Abdeckscheibe (34) an dem Verriegelungsbauteil (26);
Verbinden des Verriegelungsbauteils (26) mit dem Verriegelungsstab (12) mittels der ersten zusammenwirkenden Schraubgewinde (22);
Einsetzen des Verriegelungselements (36) durch das Verriegelungsbauteil (26) und
Verbinden des Verriegelungselements (36) mit dem Verriegelungsstab (12) mittels der zweiten zusammenwirkenden Schraubgewinde (24);
Anbringen des Verriegelungsmittels (50) an dem Verriegelungsbauteil (26), um
dadurch den Kopf (40) des Verriegelungselements (36) zu verdecken.

15. Verfahren zum Anbringen einer Radkralle (10) an einem Rad eines Straßenfahrzeugs nach Anspruch 12 oder 13 der vorliegenden Erfindung, das folgende Schritte umfasst:
Platzieren des ersten Arms, des Verriegelungsstabs (12) und des zweiten Arms neben dem Rad eines Straßenfahrzeugs;
Verbinden des Verriegelungsbauteils (26) mit dem Verriegelungsstab (12) mittels der ersten zusammenwirkenden Schraubgewinde (22) und dadurch Bewegen des ersten Arms und des zweiten Arms, sodass sie mit jeweiligen Seiten des Rades des Straßenfahrzeugs in Eingriff gelangen;
Einsetzen des Verriegelungselements (36) durch das Verriegelungsbauteil (26) und
Verbinden des Verriegelungselements (36) mit dem Verriegelungsstab (12) mittels der zweiten zusammenwirkenden Schraubgewinde (24);
Anbringen des Verriegelungsmittels (50) an dem Verriegelungsbauteil (26), um dadurch den Kopf (40) des Verriegelungselements zu verdecken.

## Revendications

1. Un sabot de Denver (10) ayant une barre de verrouillage (12), un bras (14) et une plaque de couverture (34), la barre de verrouillage (12) étant fixée de façon à ne pas tourner substantiellement relativement au bras (14), un membre de verrouillage (26) adapté pour être connecté à la barre de verrouillage (12) au moyen de premiers filetages coopérants (22), le membre de verrouillage (26) portant un élément de verrouillage (36) qui peut tourner relativement au membre de verrouillage (26), **caractérisé en ce que** l'élément de verrouillage (36) est adapté pour être connecté à la barre de verrouillage (12) au moyen de deuxièmes filetages coopérants (24), le pas des premiers filetages (22) étant plus grand que le pas des deuxièmes filetages (24).

2. Un sabot de Denver (10) selon la revendication 1 dans lequel le premier filetage du membre de verrouillage (26) est formé à l'intérieur d'un creux (30) adapté pour s'installer par-dessus une partie de la barre de verrouillage (12).

3. Un sabot de Denver (10) selon la revendication 2 dans lequel le membre de verrouillage (26) a une bride (32) adjacente à l'une de ses extrémités.

4. Un sabot de Denver (10) selon la revendication 3 dans lequel la bride (32) est située à l'extrémité du membre de verrouillage (26) opposé au creux (30).

5. Un sabot de Denver (10) selon n'importe laquelle des revendications 1 à 4 dans lequel l'élément de verrouillage (36) est un boulon ou une vis.

6. Un sabot de Denver (10) selon n'importe laquelle des revendications 1 à 5 dans lequel le membre de verrouillage (26) a un passage (44) destiné à recevoir l'élément de verrouillage (36).

7. Un sabot de Denver (10) selon la revendication 6 dans lequel le passage (44) est situé de façon substantiellement centrale à l'intérieur du membre de verrouillage (26).

8. Un sabot de Denver (10) selon n'importe laquelle des revendications 1 à 7 dans lequel le membre de verrouillage (26) peut accueillir un moyen de verrouillage (50).

9. Un sabot de Denver (10) selon n'importe laquelle des revendications 1 à 10 dans lequel le membre de verrouillage est de coupe transversale substantiellement circulaire.

10. Un sabot de Denver (10) selon la revendication 3 ou la revendication 4 dans lequel la dimension de coupe transversale de la bride est plus grande que la dimension d'une ouverture dans la plaque de couverture (34) à travers laquelle le reste du membre de verrouillage (26) peut passer.

11. Un sabot de Denver (10) selon la revendication 10 dans lequel l'ouverture dans la plaque de couverture (34) est substantiellement circulaire.

12. Un sabot de Denver selon n'importe laquelle des revendications 1 à 9 dans lequel le bras est un premier bras, le sabot de Denver ayant un deuxième bras qui est connecté de façon mobile au premier bras, les premier et deuxième bras lors de l'utilisation se mettant en prise avec des côtés respectifs d'une roue porteuse.

13. Un sabot de Denver selon la revendication 12 dans lequel la plaque de couverture est portée par le deuxième bras.

14. Un procédé de mise en sabot d'une roue porteuse avec un sabot de Denver selon les revendications 1 à 11 de la présente invention, comprenant les étapes suivantes :
faire passer la barre de verrouillage (12) à travers une partie choisie de la roue porteuse ;
installer la plaque de couverture (34) sur le membre de verrouillage (26) ;
connecter le membre de verrouillage (26) à la barre de verrouillage (12) au moyen des premiers filetages coopérants (22) ;
insérer l'élément de verrouillage (36) à travers le membre de verrouillage (26) et
connecter l'élément de verrouillage à la barre de verrouillage (12) au moyen des deuxièmes filetages coopérants (24) ;
installer les moyens de verrouillage (50) sur le membre de verrouillage (26) grâce à quoi la tête (40) de l'élément de verrouillage (36) est cachée.

15. Un procédé de mise en sabot d'une roue porteuse avec un sabot de Denver selon la revendication 12 ou la revendication 13 de la présente invention, comprenant les étapes suivantes :
placer le premier bras, la barre de verrouillage et le deuxième bras de façon adjacente à la roue porteuse ;
connecter le membre de verrouillage à la barre de verrouillage au moyen des premiers filetages coopérants, et de cette façon déplacer le premier bras et le deuxième bras en mise en prise avec les côtés respectifs de la roue porteuse ;
insérer l'élément de verrouillage à travers le membre de verrouillage et connecter l'élément de verrouillage à la barre de verrouillage au moyen des deuxièmes filetages coopérants ;
installer un moyen de verrouillage sur le membre de verrouillage grâce à quoi la tête de l'élément de verrouillage est cachée.
